# EUROPEAN PATENT APPLICATION

(11) **EP 1 616 924 A1**
(43) Date of publication of application: **18.01.2006**
(21) Application number: 04254163.1
(22) Date of filing: 13.07.2004
(51) Int. Cl.: C09D 163/00, C08K 3/04, C08K 3/32

(54) **Fire retardant composition**

(71) Applicant: Huntsman Advanced Materials (Switzerland) GmbH, 4057 Basel (CH)
(72) Inventor: The designation of the inventor has not yet been filed
(74) Representative: Baruh, Colette

(57) **Abstract**

The present invention is directed to a curable composition that provides fire retardant, self-extinguishing properties for adhesive applications The curable composition contains a particulate, phosphorous-containing compound, and another compound which is a liquid phosphorous compound or a particulate compound. The cured composition exhibits fire retardancy properties and mechanical strength.

## Description

### Field of the Invention

The present invention relates to fire retardant compositions and to the use of these compositions in the production of adhesives imparting self-extinguishing properties and good mechanical properties.

An adhesive material can be defined as a material which has the ability to wet two substrates (the adherends), undergo a change of state and create a bond to hold the adherends together.

### Background of the Invention

The demand for adhesive plastic materials continues to grow in diverse industries such as automotive, aerospace, civilian, military and manufacturing, with applications such as home and office furniture and wall coverings, auto, rail, marine, and airplane interiors, cabinetry and casing, supports for electronic and computer systems and various components for machines and cookware. As a result of this growth, there is an increasing demand for fire retardant, smoke repressant adhesive plastic materials since accidental fires continue to extract a heavy toll on life and property. Unfortunately, usual adhesive compositions based on thermoplastic and thermosetting resins, being organic in nature, are inherently combustible. This deficit has been addressed in the past, most notably by incorporating various halogen or phosphorous fire retardant additives. For example, EP 0 814 121 B 1 describes a low density, fire-retardant one part epoxy composition containing a "bromine source" component.

However, the addition of such fire retardant additives generally detracts from the desirable mechanical properties of the plastic materials. For example, it is known that phosphorus-based fire retardant additives enhance the fire retardant character of various plastics when incorporated therein, but it has been found that the amounts of additive required may severely degrade the strength and impact resistance of the compositions relative to virgin resins.

Global initiatives are banning the use of many commercially-available flame-retardant resin systems that contain halogenated compounds, such as pentabromodiphenyl ether, since it is classified as a persistent (bioaccumulating) organic pollutant. Similarly, the use of antimony compounds such as antimony trioxide, often used synergistically with halogenated flame retardants, is being restricted due to toxicity concerns.

Various compounds, different to those mentioned above, are known which individually provide a certain degree of flame retardancy. However, it is a challenge to achieve adhesives with good mechanical properties AND latent flame retardant properties, especially those adhesives which can continue to function as adhesives under rapid flame address.

We have found unexpectedly that certain combinations of flame retardants in adhesive compositions yield the sought-after mechanicals and the FR properties.

There is particular need in the aerospace industry, especially for foam containing floor elements, to use fire retardant (FR) adhesives, which do not involve above mentioned brominated or other halogenated compounds.

Bonding plastic (foamed or not) materials with an adhesive, which has FR properties is a challenging task, as high strength bonding needs to be achieved in first place [ie lap shear strengths of at least 5 MPa, preferably 10Mpa, and most preferably greater than 15 MPa]. Secondly, the adhered materials, especially if using plastics [foamed/non foamed], can start buckling and distorting the adhesive bond when under heat. Therefore the adhesive has itself to have very good thermal properties, as well as FR properties not only preventing the thermal effects on the plastic material but also the adhesive itself not distorting as the plastic material reacts to the thermal effects. Bonding foamed plastic material with an adhesive can be a challenging task as the surface to be bonded is large and irregular and it might be difficult to obtain good resistance to shearing.

There further exists a need in the art for plastic materials and adhesive resin formulations that have a high degree of latent fire retardancy while still being easily processed and that retain good mechanical properties without placing any reliance on the above mentioned conventional means to achieve fire retardant properties.

The present invention relates to fire retardant compositions that are especially useful for producing adhesives that are flame retardant, smoke repressant and have good mechanical performance without the use of halogen or antimony additives. Such compositions can be used with metallic and fibre reinforced plastics, as well as foamed plastic backing.

The present invention relates especially, but non exclusively, to the so-called Two-Components (or Two-Parts) adhesives field where a First Component is kept separate from a Second Component reacting with the first. The two Components are mixed together before or during application to the substrates to be adhered. The First Component usually contains at least one monomer oligomer or polymer, while the Second Component usually contains a curing agent or hardener for the monomer, oligomer or polymer.

In common practice, the two Components are pumped or extruded from their initial containers, for examples drums or cartridges, through delivery pipes to mixer heads whereby the two Components are thoroughly blended to form a mixture which is discharged or extruded through a shaped orifice to the substrate.

In such methods the Components and the mixture are submitted to high shear stress regime, especially in applications where the components are rapidly pumped to reach a rapid dispensation of the mixture. Such high shear stress regime can be detrimental to the rheological and mechanical properties of the adhesive mixture adhesive, such as its viscosity, flow or shape retention.

The invention also relates to One-part adhesives and to paste like adhesives, which can be deposited as paddies.

### Summary of the Invention

A composition comprising:
(a) a monomer, oligomer or polymer, or any mixture thereof;
(b) a particulate, phosphorous-containing compound, and
(c) at least one other compound which is a liquid phosphorous compound or, preferably, a particulate compound,

wherein the presence of compounds (b) and (c) imparts fire retardant properties to the composition and the composition has adhesive properties.

### SUBSTRATES TO BE ADHERED

The composition according to the invention may be used to adhere different kinds of materials or substrates. The composition may bond different substrates together or 2 substrates made of the same material. The invention is especially useful to bond the following materials:
- plastic material eg polyethylene, polypropylene, polystyrene, ABS, polycarbonate etc
- foamed [cellular] plastic material, eg polyethylene, polypropylene, polystyrene, ABS, polycarbonate etc foams. By foamed, we mean the plastic material has voids to make the plastic light weight, and which voids maybe open cell or closed, fabricated during manufacture of the plastic, or voids due to presence of microballoons of plastic or glass filled with air or another gas,
- composite material such as fibers, e.g. glass and carbon fibers,-comprising material. Examples of such material are: GRP i.e. glass reinforced plastic, CFRP i.e. carbon fibre reinforced plastic, ARPi.e. aramid reinforced plastic for example Kevlar or other FRP -fibre reinforced plastic, or other materials comprising glass fibers
- metal or metallic material, (eg aluminium)

### OTHER ASPECTS OF THE INVENTION

In another aspect, there is provided a process of producing a fire retardant laminate, the process comprising the steps of applying certain of the fire retardant compositions described above to a substrate and curing or setting the composition and substrate to form a laminate.

It is preferred that the compositions according to the invention are substantially free of halogenated and antimony compounds to meet the current toxicologic concerns.

An object of the present invention is to provide a fire retardant composition that produces or can be cured to produce polymers or polymer-based materials, for example, polyether resins, polyamides, nylons, polyesters, phenoxy resins, ABS combinations, polyethylenes, polypropylenes, polyurethanes, polyureas, polyacrylates/polymethacrylates (homo- and copolymers), polystyrenes, polychlopropene, phenolics, silicones, silicone rubbers and copolymers and combinations of polymers.

Another object of the present invention is to provide a fire retardant composition that can be used as a coating and or as a laminating resin for aerospace (including satellite), auto, marine, electronic, and certain architectural industries.

A further object of the present invention is to provide a cured article made from the flame retardant compositions described above.

Yet a further object of the present invention is to provide a method for combining a non-combustible substrate, usually inorganic fibers such as glass fibers, with the fire retardant compositions described above to form fire retardant composites that are useful as adhesives, sealants, coatings, and in laminated composites for flooring, ceiling, or wall coverings, as well as moulded laminar composites (e.g. for auto, rail, aerospace, and certain architectural applications). Adhesives application are especially preferred as permitting to bond two substrates together to form a composite structure while coating and sealant applications requires surface properties as gloss and hardness.

### Detailed Description of the Invention

The composition of the present invention may be used to produce fire retardant materials with self-extinguishing properties and good mechanical properties.

Preferably, component (a) leads to a thermoset when cured.

Preferably, component (a) comprises epoxy functional monomer, oligomer or polymer.

Preferably, the particulate fire retardant (b) is a particulate phosphorus containing compound, preferably ammonium polyphosphate or triphenyl phosphate, more preferably melamine formaldehyde coated ammonium polyphosphate.

The particulate compound [c] is a preferably a heat expandable material, more preferably expandable graphite.

Preferably the curable composition does not comprise more than trace amounts of halogenated resin components, halogenated additives or antimony trioxide.

Preferably, curable composition further comprises a curing agent, preferably an amine hardener.

The invention is also related to a method of producing a fire retardant composite comprising the steps of applying the fire retardant composition of any preceding claim to at least one substrate and curing or setting the composition and substrate to form a composite.
The invention also provides a composite comprising a cured composition formed from the curable composition.

The invention, though not limited by this, further relates to a two-part pack comprising a first pack comprising (a) a monomer, oligomer or polymer, or any mixture thereof; (b) a particulate, fire retardant, phosphorous-containing compound, and (c) at least one other fire retardant compound which is a liquid phosphorous compound or, preferably, a particulate compound, and a second part comprising a curing agent, preferably an amine hardener.

### MONOMER, OLIGOMER OR POLYMER, OR ANY MIXTURE THEREOF

Preferably, component (a) leads to a thermoset when cured. A thermoset product is preferred over a thermoplastic because of its property to retain his shape and other properties when heated while a thermoplastic material will flow and will not be able to keep the required adhesive properties.

Preferably, the monomer, oligomer or polymer is organic and has a molecular weight greater than about 300. The fire retardant composition may include a combination of two or more monomers, oligomers or polymers having the same or different molecular weights and degrees of functionality. Such combinations can be advantageously combined in a formulation that results in a cured resin having a high Tg (glass transition temperature).

The monomer, oligomer or polymer preferably comprises functional groups selected from the group consisting of epoxy, acrylic, methacrylic, amine, hydroxyl, carboxyl, anhydride, olefinic, styrene, acetoxy, methoxy, ester, cyano, amide, imide, lactone, isocyanate, urethane and urea.

Preferably, component (a) contains epoxy functional monomer, oligomer or polymer.

Examples of useful monomers, oligomers or polymers include bistriazine resins, phenoxy resins, bis-phenol epoxy resins, phenolic novolac resins, epoxidised phenolic novolac resins, urethane resins, polyvinyl acetate resins, and any other resins that alone or in combination are within the knowledge of one of ordinary skill in the art as useful in adhesive resin compositions. Further examples of useful resins are disclosed in U.S. Pat. Nos. 5,674,611, 5,629,098, and 5,874,009, the specifications of which are incorporated herein by reference.

More preferably, the monomer, oligomer or polymer contains aromatic groups.

The monomer, oligomer or polymer, or mixture thereof preferably has a viscosity of less than about 20,000 cps, preferably in a range from about 900 to 20,000 centipoise, more preferably from about 1200 to about 12,000 centipoise.

More preferably, the monomer, oligomer or polymer is epoxy functional, particularly of viscosity less than 20,000 cps, most preferably less than 10,000 cps, having a low molecular weight (300-1000).

Highly preferred is a mixture of low viscosity epoxies with two or more epoxy groups per molecule, as exemplified by diglycidyl ethers of bisphenol A, hydrogenated bisphenol A, bis-glycidyl ether of bisphenol F, hydrogenated bisphenol F, epoxy novolac, cycloaliphatic epoxies, and tri- and tetra-functional glycidyl functional tertiary amines. The mixture of epoxies preferably comprises bisphenol A and bisphenol F.

A highly preferred is a mixture of low viscosity bis-glycidyl epoxies of bisphenol A and bisphenol F, with or without reactive-epoxy diluents, for maximum cured laminate or adhesive strength.

The fire retardant composition of the present invention may comprise about 40 to about 85 percent by weight of the monomer, oligomer or polymer, or mixture thereof. PARTICULATE PHOSPHOROUS CONTAINING COMPOUND (fire retardant, Phosphorus Containing, solid additive)

The composition of the present invention comprises a fire retardant additive containing phosphorus compound.

The particulate phosphorus compound of the present invention may be selected from compounds as red phosphorus; ammonium polyphosphates; phosphonium bromides, triphenyl phosphate.

Further details relating to.these materials may be found in the section by E. D. Weil in The Encyclopedia of Chemical Technology, vol. 10, 3rd Edition, pages 396-419 (1980), herein incorporated by reference.

Preferably, the particulate phosphorus containing compound is an ammonium polyphosphate coumpound, providing intumescent properties, for example melamine formaldehyde coated ammonium polyphosphate such as FR CROS 489. Ammonium polyphosphate particulate compound can be crystalline, have a P content of 28%, a N content of 19%, no-halogen, low solubility in water and decomposes above 250 C releasing non-combustible gasses, reducing the access of oxygen to the surface. The residual acidic polyphosphates may catalyse the intumescent reaction by dehydration of the carbon rich material.

The particulate phosphorus compound of the present invention may be selected from such compounds as red phosphorus; ammonium polyphosphates; phosphonium bromides, triphenyl phosphate.
Further details relating to these materials may be found in the section by E. D. Weil in The Encyclopedia of Chemical Technology, vol. 10, 3rd Edition, pages 396-419 (1980), herein incorporated by reference.

Preferably, the phosphorus compound is a liquid organo phosphate or phosphonate compound and the particulate phosphorus containing compound is melamine formaldehyde coated ammonium polyphosphate.
Also preferable phosphorus compound of the present invention is a liquid phosphonate ester compound comprising greater than about 20 percent by weight of phosphorus and greater than about 50 percent by weight of phosphorus oxide.

### OTHER, PARTICULATE COMPOUND (Compatible particulate fire-retardant)

Component (c) may for example comprise any other fire retardant material which is a particulate, and different from compound (b) eg expandable graphite, expandable mica, expandable nanoclays. Preferably component (c) comprises expandable graphite.

We have found that surprisingly, the incorporation of 2 different particulate fire retardant compounds in the composition may lead to adhesive mixture still having appropriate flowing, adhesive properties and mechanical properties. One could have expected that incorporation of expandable material especially layered material as expandable graphite or mica into which the resin could flow would decrease the overall properties of the adhesive mixture. It has been found that Excellent flame retardancy can be achieved by combining two different particulate fire retardant compounds, for example Expandable graphite with Ammonium Polyphosphate. It is believed that the first mentioned compound takes the flame away from the combustible material while the phosphorous containing particulate creates an intumescent layer behind the graphite. As the composition seems to never actually catch flame, the smoke produced is minimal. Furthermore, excellent mechanical properties have been achieved. It is believed that when used alone as fire retardant compound, particulate phosphorous compound catches the flame at the surface while Expandable graphite burns underneath the surface then the combination of both fire retardant compound acts in a synergystic effect.

Expandable graphite may be manufactured from natural crystalline graphite flake. Deposits of crystalline graphite are numerous and found around the world, usually as inclusions in metamorphic rock, or in the slits and clays that result from their erosion. Graphite is recovered from the ore by crushing and flotation and is usually beneficiated to give graphite flake that is 90-98% carbon. Crystalline graphite consists of stacks of parallel planes of carbon atoms. Because no covalent bonding exists between the layers other molecules can be inserted between them (intercalation). In one commercial process for the production of expandable graphite, sulphuric acid is inserted into the graphite after which the flake is washed and dried. The intercalant is trapped inside the graphite lattice, so the final product is a dry, pourable, non-toxic material with minimal acidity (pH~ 3-4). When the intercalated graphite is exposed to heat or flame, the inserted molecules decompose to generate gas. The gas forces apart the carbon layers and the graphite expands.

A wide variety of expandable graphites of different particle sizes, acidity, decomposition temperatures, and expansion efficiency, are nowadays commercially available (e.g. GRAFGUARD® product series by Graftech, expandable graphite Ex 95A120SC; 50 99 250 HMY; L.T.IF-150 BIC, from NGS Naturgraphit GmbH, or expandable graphite materials from Cleanline, Pune, India). GRAFGARD has been found as particularly appropriate.

Expandable graphite, such as GRAFGUARD, contains neither halogen additives nor lead or chromium. An intercalant exist between graphite planes and, on heating, it degrades to produce gases to force plates apart thereby forming an "insulating char layer" which protects the substrate from heat and air. It also interferes with the migration of decomposition products to the combustion zone. It has onset temperatures of about 160 or 220 C and particles sizes of 180 or 300 micron.. It can have acid, neutral or basic surface chemistry. It can have an un-expanded specific volume of 1.25 cm3/g. On Post-expansion at 600°C:

| | |
|---|---|
| 160-80 | 200 cm3/g |
| 160-50 | 250 cm3/g |
| 220-80 | 100 cm3/g |
| 220-50 | 200 cm3/g |

The proportion of component (c), especially expandable graphite, used in a curable composition of the invention preferably ranges between 1 and 60%w/w, preferably between 3 and 40% w/w.

In addition, when the compatible expandable graphite /base resin composition is used to make composite materials such as laminate panels having a fibrous or other suitable substrate, the composition can be selected so that it readily wets out the desired substrate. For example, it seems that the presence of aromatic groups on the resin yields particularly good wetting and mechanical coupling to the expandable graphite and to the foam backing, which leads to superior mechanical strength in a cured adhered article or laminate which has also the required latent fire retardant qualities.

### LIQUID PHOSPHOROUS COMPOUND

A mixture of liquid phosphorus compounds and particulate phosphorus compounds can provide composition with suitable flowing, mechanical and adhesive properties.
The liquid phosphorus containing compounds allow ready mixing with the monomer/oligomer/polymer composition, so that the flame retardancy effect is produced in the polymer matrix. However, it is known that liquid, phosphorous-containing flame retardant additives deteriorate the mechanical performance of polymeric materials. On the other hand, it is believed that the particulate phosphorus containing material delivers a concentration of phosphorus at local points in the polymer, acting as resin combustion retarders, much in same way as particles act as 'toughening agents preventing crack propagation' in polymers.

Liquid phosphorus-based fire retardant compounds having a boiling point, or decomposition point, of at least about 180° C are suitable for the present invention. The decomposition point of at least about 180° C is required for applications where heat curing is used, since the phosphorus compound must be thoroughly compounded with the monomer, oligomer or polymer, or any mixture thereof, and must not volatilize or degrade at process temperatures. Suitable examples are: oligomeric alkyl or aryl phosphonates (e.g. of dihydric phenols); triaryl phosphates, such as tricresyl phosphate; alkyl diphenyl phosphates, such as isodecyl diphenyl phosphate and 2-ethylhexyl diphenyl phosphate; triphenyl phosphates, such as triphenyl phosphate; phosphonitrilics; phosphine oxides; reactive organophosphorus monomers, and various phosphorus-containing diols and polyols.

Particulate compound such as expandable graphite can however be preferred over liquid phosphorous compound when outstanding mechanical properties such as lap shear resistance are sought after. Other particulate compounds may be used which should, as far as possible, remain as a particulate in the composition and not dissolve into it, in contrast with for example siloxane containing compounds.

### OTHER COMPONENTS

The fire retardant composition of the present invention may further comprise a curing agent such as an amine hardener, e.g. aliphatic or cycloaliphatic amines and adducts, adducts with bisphenol or other hydroxy functional catalysts, amidoamines, imidazoline adducts, an anhydride, cyanoguanidine, polyamides and mixtures thereof. It is highly preferred that the fire retardant composition be curable at room temperature with work life/gel time controlled by the choice of hardener. Heat curing may also be used, at preferably less than 100°C.

Other additives include a mixture of a polyisocyanate having at least two isocyanate groups with a polyol having at least two hydroxyl groups or a carboxylic acid, and a mixture of acrylates or methacrylates with an appropriate initiator. Additives having functionalities equal to 2 are highly preferred mixed with smaller amounts of additives having a functionality that is greater than 2. Tougheners such as polytetrahydrofuran-diol or -triol and related polyglycol-diols can also be used with isocyanates to create flexible urethane segments in order to impart toughness in the laminated products made from the compositions described herein. Other tougheners are polybutadiene oligomers [eg epoxy or hydroxy functional]

Preferably, the fire retardant composition of the present invention will include from about 10 to 60 wt % of a halogen- and antimony-free flame retardant additive and from about 40 to 90 wt % of one or more monomers, oligomers, or polymers, or any mixtures thereof. More preferably, the fire retardant composition of the present invention will include from about 10 to about 25 wt %, most preferably from about 15 to about 25 wt %, of one or more halogen- and antimony-free flame retardant additives with the remainder being one or more monomers, oligomers, or polymers, or any mixtures thereof.

Preferably the composition is substantially free of compounds reducing the density of the composition. Preferably, the cured composition has a density of more than 0.85 more preferably at least 1g/cm3. Usually, the composition is free of hollow microspheres and blowing agents, which lead to low density cured compositions.

### COMPOSITE METHODS

The present invention provides a method of producing a fire retardant composite comprising the steps of applying the fire retardant adhesive composition between 2 substrates and curing or setting the composition and substrates to form a composite, one of the substrates preferably being a plastic material, which maybe foamed or non-foamed.

The substrates in the foregoing method, to form composites and laminates may be any substrate known in the art of composite materials. For example, the substrate may be wood, aluminium, fibre reinforced plastic on one side and foamed or non-foamed polymers eg polyethylene, polystyrene, ABS, polycarbonates, polypropylene etc or any other (or same) material as the other substrate forming the composite or laminate.

If lamination is involved, the method of laminating is usually carried out with the assistance of vacuum, although with low enough viscosity liquids, gravity and 'surface-tension'-only assisted lamination may be possible. The best viscosity ranges for use in laminating and fiber wetting systems (low surface energy liquid spreading on higher surface energy fibers) is 500-10,000 cps, most preferably 1000-5000 cps.

The compositions of the present invention can be used also as coatings and as the outer layers of composites.

### EXAMPLES

**COMPONENTS:**

| Component | CAS | Source | Action |
|---|---|---|---|
| Araldite GY 260 | 25068386 | Huntsman | Bisphenol A Epoxy Resin |
| Araldite DY 0397 | 2425798 | Huntsman | Reactive Epoxy Diluent |
| FR CROS 489 | 68333799 | Budenheim Iberica | Coated Ammonium Polyphosphate flame retardant |
| Grafguard 220 80 B | Mixture (7782425 7664939 7697372) | GrafTech Int Ltd | Expandable Graphite |
| Reofos 50 | Mixture (68937417 115866) | Great Lakes Chemical Corp | Liquid Phosphorous flame retardant |
| Cabosil TS 720 | 67762907 | Cabot | Hydrophobic Silica |
| Versamid 115 | 68410231 | Henkel SPA | Polyaminoamide |
| Aradur 140 BD | Mixture (68410231 112243) | Huntsman | Polyaminoamide |
| HY 960 | Mixture (90722 71074890) | Huntsman | Tertiary Amine Catalyst |
| Dabco 33LV | Mixture (25265718 280579) | Air Products (chemicals) Plc | Catalyst |
| Ruetasolv DI | 38640629 | Rutgers Kureha Solvents GmbH | Viscosity reducing, cure regulating plasticiser |
| BROC [dibromomethylphen oxy)methyl] | 30171803 | Albright & wilson | Brominated Flame Retardant |

Example 1 is a pumpable flame retardant, 2 part epoxy adhesive, which can be supplied in bulk or cartridges (1:1 by volume). It exhibits an open time greater than 1 hour, gels in around 3 hours and has a 1 MPa handling strength after 5 hours. Full cure at room temperature is realised after 48 hours at 16 MPa. Its formulation is based around a low viscosity epoxy system and uses expandable graphite and ammonium polyphosphate to minimise ignition and self extinguish the flame following any ignition.
Example 2 is a lower viscosity (thus easier to pump and spread) pumpable flame retardant, 2 part epoxy adhesive, supplied in bulk or cartridges (1:1 by volume). It exhibits a gel time around 8 1/2 hours. Following cure at room temperature for 48 hours a lap shear strength of 5.5 MPa is realised. This formulation incorporates ammonium polyphosphate and liquid phosphorous to impart flame retardancy.
Comparative Example 3 is a pumpable non-flame retardant epoxy based adhesive formulation with no fire retardant additives.
Comparative example 4 is an epoxy adhesive containing conventional [and now under legislative pressure to remove from use], Br based flame retardant additives.

### FORMULATIONS: wt %

**RESIN PART A**

| Component | **Example 1** | **Example 2** | **Comparative Example 3** | **Comparative Example 4** |
|---|---|---|---|---|
| Araldite GY 260 | 35.33 | 28.19 | 58.56 | 45.10 |
| Araldite DY 0397 | 10.37 | 15.96 | 33.15 | 25.53 |
| FR CROS 489 | 33.11 | 39.89 | - | - |
| Grafguard 220 80 B | 18.9 | - | - | - |
| Reofos 50 | - | 11.97 | - | - |
| Cabosil TS 720 | 1.89 | 3.99 | 8.29 | 6.38 |
| BROC | - | - | - | 22.98 |

**RESIN PART B**

| Component | **Example 1** | **Example 2** | **Comparative Example 3** | **Comparative Example 4** |
|---|---|---|---|---|
| Versamid 115 | 23.06 | 18.99 | 43.75 | 22.1 |
| Aradur 140 BD | 23.06 | 18.99 | 22.42 | 44.2 |
| FR CROS 489 | 48.3 | 39.78 | - | - |
| HY 960 | 3.07 | 4.94 | 5.83 | 5.52 |
| Dabco 33LV | 2.51 | 2.47 | 2.92 | 2.65 |
| Ruetasolv DI | - | 14.82 | 17.50 | 17.68 |
| TS 720 | - | - | 7.58 | 7.85 |

### FORMULATION PREPARATION

For each component, all of the liquids are first added and mixed under vacuum for 10 minutes using a planetary mixer. Following this, the solid components (excluding the thixotropic agent) are added and mixed under vacuum for 20 minutes using a planetary mixer. Finally the thixotropic agent is added and mixed under vacuum for a further 5 minutes using a planetary mixer.

### TEST PROCEDURES

Pump rate: the material was placed in a 1:1 cartridge and extruded by hand using a cartridge gun and static mixer.
Gel times: these were determined using a Metzler gel timer.
Lap shear strength: this was tested according to ISO 4587 standard using chromic acid etched aluminium. It gives an indication of the mechanical properties of the adhesive composition.
The pump-ability of a material is evaluated by placing the parts of the material in a 1:1 cartridge and extruding by hand using a cartridge gun and static mixer depositing at least 15 g/min, preferably more than 100 g/min.cartridge or drums.

Bum testing was done by coating and curing a thin layer of the material onto an aluminium foil and evaluating the coating under application of a Bunsen flame according to FAR 25.853. Extent of smoke production was assessed visually.

### RESULTS:

| Property | Units | Example 1 | Example 2 | Comparative Example 3 | Comparative Example 4 |
|---|---|---|---|---|---|
| Pump rate | g/min | 15 | 264 | 228 | 280 |
| Gel time | Hrs : min | 3:00 | 8:25 | 5:20 | 7.04 |
| Lap shear @RT (48hrs @ RT) | MPa | 16.0 | 5.5 | 11.6 | 12.7 |
| 12 sec ign After Flame | s | 0 | 0 | 30 | 10 |
| 12 sec ign Burn Length | cm | 2 | 1 | 17 | 9 |
| 12 sec ign Smoke | Visual | Very little | Very little | Extensive | Extensive |

### CONCLUSIONS

It is seen readily that Example 1 exhibits excellent flame retardant properties with respect to bum time, bum length and smoke production, and yet has still acceptable pump rate allowing rapid dispensation of the mixture and surprisingly has a high mechanical strength in the adhesive bond, according to the lap shear strength value. This latter point is a surprise as high amount of filler in epoxy resins can lead to a drop of the mechanical properties. Example 2 has much better pump rate being less viscous, and achieves lower but acceptable mechanical strength, and has excellent flame retardancy properties.
Example 3 does not have any flame retardants, representing a typical adhesive having good pump rate and mechanical performance, but does not have any resistance to direct flames, producing severe smoke and extensive rapid burning.
Example 4 is the traditional flame resistant adhesive containing brominated compounds: intermediate quality flame retardancy is obtained, with no effect on smoke.

By varying the types and weight % of claimed compounds a variety of new adhesives maybe engineered having required rheological and mechanical properties, having the required flame retardant properties, without resorting to brominated compounds. The adhesives could be fluid and readily pumpable or paste like and deposited as paddies.

## Claims

1. A curable composition comprising:
(a) a monomer, oligomer or polymer, or any mixture thereof;
(b) a particulate, phosphorous-containing compound, and
(c) at least one other compound which is a liquid phosphorous compound or a particulate compound,
wherein the presence of compounds (b) and (c) imparts fire retardant properties to the cured composition and the composition has adhesive properties.

2. The curable composition of claim 1, wherein component (a) leads to a thermoset when cured.

3. The curable composition of any preceding claim , wherein component (a) comprises epoxy functional monomer, oligomer or polymer.

4. The curable composition of any preceding claim, wherein the particulate fire retardant [b] is a particulate phosphorus containing compound, preferably ammonium polyphosphate or triphenyl phosphate, more preferably melamine formaldehyde coated ammonium polyphosphate.

5. The curable composition of any preceding claim, wherein the particulate compound [c] is a heat expandable material, preferably expandable graphite.

6. The curable composition of any preceding claim, wherein said composition does not comprise more than trace amounts of halogenated resin components, halogenated additives or antimony trioxide.

7. The curable composition of any preceding claim, further comprising a curing agent, preferably an amine hardener.

8. A method of producing a fire retardant composite comprising the steps of applying the fire retardant composition of any preceding claim to at least one substrate and curing or setting the composition and substrate to form a composite.

9. A composite comprising a cured composition formed from the curable composition according to any of claims 1 to 7.

10. A two-part pack comprising a first pack comprising (a) a monomer, oligomer or polymer, or any mixture thereof; (b) a particulate, fire retardant, phosphorous-containing compound, and (c) at least one other fire retardant coumpound which is a liquid phosphorous compound or, preferably, a particulate compound, and a second part comprising a curing agent, preferably an amine hardener.
